# FASCICULE DE BREVET EUROPEEN

(11) **EP 3 215 765 B1**
(45) Date de publication et mention de la délivrance du brevet: **27.03.2019**
(21) Numéro de dépôt: 15778989.2
(22) Date de dépôt: 18.09.2015
(51) Int. Cl.: F16H 63/30, F16H 63/20

(54) **DISPOSITIF DE FREINAGE ET DE COMMANDE INTERNE DE MARCHE ARRIÈRE POUR BOÎTE DE VITESSES**
VORRICHTUNG ZUM BREMSEN UND ZUR INTERNEN STEUERUNG DES ZURÜCKSETZENS IN EINEM GETRIEBE
DEVICE FOR BRAKING AND INTERNAL CONTROL OF REVERSING IN A GEARBOX

(30) Priorité: 07.11.2014 FR 1460795
(43) Date de publication de la demande: 13.09.2017
(73) Titulaire: Renault s.a.s, 92100 Boulogne-Billancourt (FR)
(72) Inventeur: TERRASSE, Didier, 78360 Montesson (FR)
(86) Numéro de dépôt international: PCT/FR2015/052501
(87) Numéro de publication internationale: WO 2016/071588

(56) Documents cités:
- EP-A1- 0 300 843
- EP-A2- 1 306 583
- FR-A1- 2 940 386
- JP-A- H0 932 921

## Description

La présente invention concerne la commande interne des boîtes de vitesses manuelles, dans lesquelles la sélection des lignes de vitesses s'effectue par un déplacement en rotation d'un axe sélection, et le passage d'une vitesse sur la ligne de vitesses sélectionnée s'effectue par le déplacement en translation d'un élément de commande.

Elle a pour objet un dispositif de freinage de marche arrière pour boîte de vitesses à arbres parallèles comportant un axe de marche arrière monté dans un carter de boîte de vitesses et portant un pignon intermédiaire de marche arrière qui engrène en permanence avec un pignon primaire de marche arrière. Le pignon intermédiaire peut se déplacer entre une position de désengagement et d'engagement de marche arrière, sous la commande d'un crabot de marche avant actionné par un doigt de passage déplacé en rotation avec un axe de sélection pour sélectionner une ligne de vitesses et déplacé en translation dans une clé verrouillée sur l'axe de sélection. Le doigt peut alors engager une vitesse de marche avant ou la marche arrière.

L'invention a également pour objet un dispositif de commande interne de boîte de vitesses manuelle à arbres parallèles comportant un pignon primaire de marche arrière monté sur un arbre primaire de la boîte, un pignon secondaire de marche arrière monté sur un arbre secondaire de la boîte, et un pignon intermédiaire de marche arrière mobile entre une position de désengagement de marche arrière, où il est dégagé du pignon secondaire de marche arrière et une position d'engagement de marche arrière où il est engagé avec celui-ci.

Elle a encore pour objet une boîte de vitesse comportant un tel dispositif de freinage ou de commande interne.

Les boîtes de vitesses manuelles à arbres parallèles comportent au moins un arbre primaire et un arbre secondaire entre lesquels sont répartis un ensemble de pignons fixes et de pignons fou, dont la disposition définit les différents rapports de marche avant de la boîte et son rapport de marche arrière. Lorsque la boîte dispose d'un axe intermédiaire de marche arrière portant un pignon intermédiaire mobile, en prise avec un pignon fixe de l'arbre primaire fixe et un pignon fixe de l'arbre secondaire, ce pignon intermédiaire peut engrener avec le pignon primaire, soit depuis une position initiale de désengagement de la marche arrière, soit lors de son déplacement à l'écart de celle-ci. Dans tous les cas, il engrène avec le pignon primaire de marche arrière, avant de rencontrer la denture du pignon secondaire.

Lorsque les entrées de denture du pignon intermédiaire de marche arrière entrent en contact avec celles du pignon secondaire de marche arrière, la différence de vitesse entre ces deux pignons génère un craquement. Pour assurer un passage en marche arrière, on considère que la vitesse de l'arbre primaire ne doit pas dépasser 150 tr/min, alors que le régime de ralenti est d'environ 800 tr/min. Il faut donc freiner l'arbre primaire, avant que le pignon intermédiaire ne vienne craboter le pignon.

Ce problème de craquement peut être résolu en ajoutant un synchroniseur sur la ligne de marche arrière, de manière à synchroniser la marche arrière avant son engagement. Sans synchroniser la marche arrière, on peut simplement la freiner. Par la publication FR 2 604 233, on connaît un système de freinage de marche arrière, qui agit directement comme un frein, directement sur l'axe de marche arrière.

Il est également possible de freiner l'arbre primaire, comme enseigné par la publication FR 2 940 386, qui révèle les éléments selon le préambule de la revendication indépendante 1, dont on connaît une boîte de vitesses manuelle avec un frein de marche arrière utilisant un synchroniseur de marche avant. Celui-ci est déplacé en translation lors du passage de la marche arrière, sur une distance suffisante pour actionner un synchroniseur de marche avant, sans risque d'engagement du rapport correspondant. Le moyen d'actionnement de la fourchette de marche avant est constitué par une rampe coopérant avec un système de billage qui repose dans un évidement prévu à la partie supérieure de la fourchette faisant face au doigt de marche avant. La rampe du doigt agit sur le billage, et entraine la fourchette de marche avant. C'est le tarage du ressort associé à la rampe, qui détermine l'effort de synchronisation. Une contre rampe sur ce même doigt, permet à la fourchette de marche avant de revenir en position après le freinage. Il faut donc passer à nouveau sur cette contre rampe pour revenir en position de point mort, ce qui génère un effort supplémentaire en sortie de marche arrière.

Pour pallier les inconvénients du système précité, la présente invention vise à assurer un freinage plus efficace de la marche arrière, en contrôlant un synchroniseur de marche avant, en amont de sa fourchette d'actionnement.

Dans ce but, elle propose que le doigt déplace une clavette montée à l'intérieur de la clé, et engagée radialement dans un crabot de marche avant qu'elle entraîne sur une première partie de la course d'engagement de la marche arrière. Sur une deuxième partie de la course d'engagement de la marche arrière, la clavette s'escamote radialement vers l'intérieur de la clé, pour échapper au crabot de marche avant.

De préférence, la clavette échappe du crabot de marche avant, avant le crabotage entre le pignon intermédiaire de marche arrière et le baladeur correspondant.

Selon un mode de réalisation particulier de l'invention, la clavette présente une première piste de guidage guidée sur une première piste intérieure de la clé sur la première partie de la course d'engagement de la marche arrière, et une deuxième piste de guidage guidée sur une deuxième piste intérieure de la clé, sur une deuxième partie de la course d'engagement de la marche arrière.

Grâce à ces dispositions, l'entraînement de la fourchette de marche avant est assuré par la clavette escamotable. Le flux des efforts ne passe ni dans la rampe ni dans le billage, ce qui permet un tarage très faible du billage, donc une trainée très faible entre la clavette et la clé. Par ailleurs, le contact entre la clavette et le crabot est positif. Il en résulte que l'effort de synchronisation n'est pas limité par la coopération entre une rampe et un billage. Le dispositif proposé présente donc un meilleur comportement à froid. Il se monte sur les boîtes de vitesses, dont la sélection est obtenue par rotation, et le passage par translation.

L'invention sera mieux comprise à la lecture de la description suivante d'un mode de réalisation non limitatif de celle-ci, en se reportant aux dessins annexés, sur lesquels :
- les figures 1A et 1B montrent le dispositif de commande interne de la boîte au point mort, et en position de sélection de marche arrière,
- la figure 1C est une vue éclatée du dispositif de freinage,
- la figure 1D est une vue intérieure de la clé de verrouillage montrant ses surfaces de contact,
- la figure 1E montre les surfaces de contacts de la clavette,
- la figure 2A est une section du dispositif en position de sélection de cinquième,
- la figure 2B est une section du dispositif en position de sélection de marche arrière,
- la figure 2C est une section du dispositif lors du dégagement de la clavette, et
- la figure 2D est une section du système en phase de passage de marche arrière.

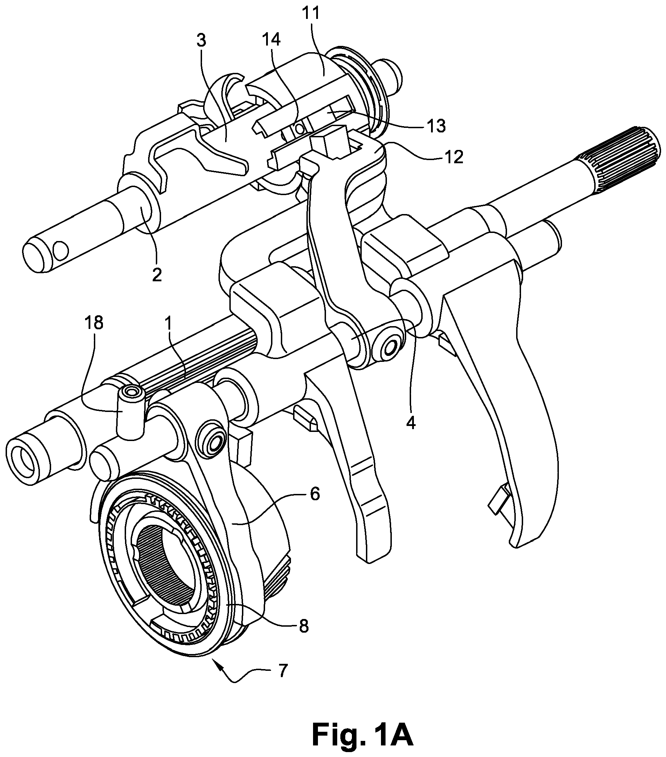

La figure 1A montre le dispositif de commande interne, qui est proposé pour une boîte de vitesses manuelle à arbres parallèles comportant un pignon primaire de marche arrière monté sur un arbre primaire de la boîte, un pignon secondaire de marche arrière monté sur un arbre secondaire de la boîte, et un pignon intermédiaire de marche arrière mobile entre une position de désengagement de marche arrière, où il est dégagé du pignon secondaire de marche arrière et une position d'engagement de marche arrière où il est engagé avec celui-ci. Ce dispositif de commande comporte un dispositif de freinage spécifique.

Sur la figure 1A, on a représenté les éléments principaux du dispositif autour d'un arbre primaire 1 de boîte de vitesses. Ce dispositif comprend un axe de sélection 2, qui porte un doigt de passage 3. Sur cette vue, l'axe de sélection 2 est au point mort. L'axe de cinquième 4 porte la fourchette de cinquième 6 et le synchroniseur de cinquième 7 avec son baladeur 8 et un billage de cinquième 18. L'axe de sélection 2 porte une clé d'inter-verrouillage 11, qui entraîne en rotation le doigt 3 lors de la sélection d'une ligne de vitesses. Le crabot de cinquième 12 est goupillé sur l'axe de cinquième 4, et entraîne la fourchette de cinquième 6. Le doigt 3 se positionne dans le crabot pour sélectionner la ligne de vitesses, puis il est déplacé en translation par un mécanisme non représenté, pour passer une vitesse. Une clavette escamotable 13 est glissée à l'intérieur de la clé 11. Elle se déplace en translation avec le doigt de passage 3. Un pion 14 interdit le basculement de la clavette 13 dans la clé 11. Un ressort (non représenté) prend appui sur le doigt 3, pour maintenir la clavette 13 en appui sur la clé. Le crabot de cinquième 12, qui est goupillé sur l'axe de cinquième 4, entraine la fourchette de cinquième 6. Le baladeur de cinquième 8 agit sur le synchroniseur 7 pour freiner l'arbre primaire 1 lors de l'engagement de la marche arrière.

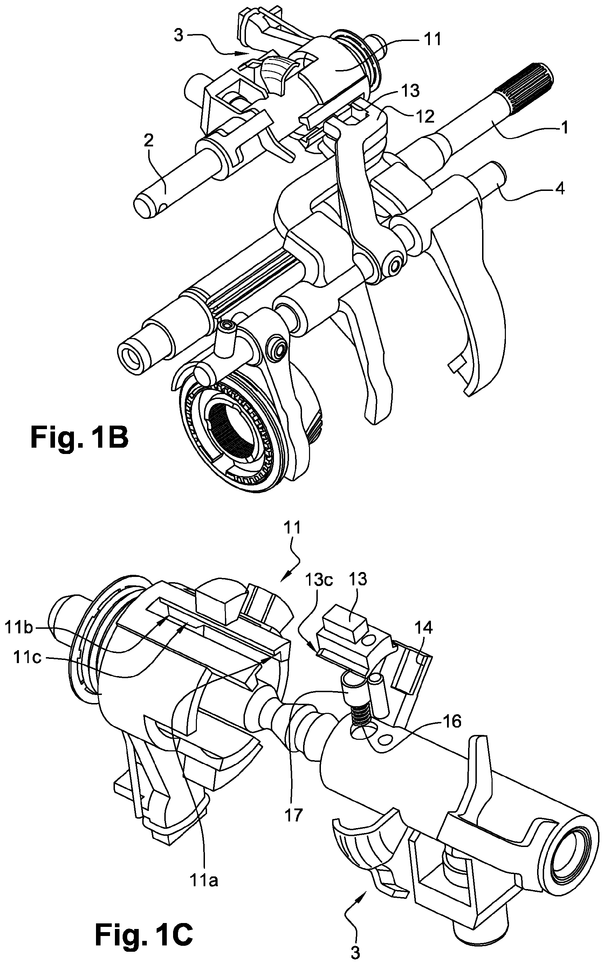

Sur la figure 1B, la clé 11 a tourné pour sélectionner la marche arrière. La clavette 13 est positionnée dans le crabot de cinquième 12. La figure 1C montre les éléments principaux du dispositif de freinage de marche arrière. Ce dispositif est conçu pour une boîte de vitesses à arbres parallèles comportant un axe de marche arrière monté dans un carter de boîte de vitesses et portant un pignon intermédiaire de marche arrière qui engrène en permanence avec un pignon primaire de marche arrière, et qui peut se déplacer entre une position de désengagement et d'engagement de marche arrière. Le déplacement s'effectue sous la commande du crabot de marche avant 12 actionné par le doigt de passage 3. Le doigt est déplacé en rotation avec l'axe de sélection 2 pour sélectionner une ligne de vitesses et déplacé en translation dans la clé 11 verrouillée sur l'axe de sélection 2 pour engager, soit une vitesse de marche avant, soit la marche arrière, sur la même ligne de vitesses. Sur la figure, on voit :
- la clavette escamotable 13, logée à l'intérieur de la clé 11, avec sa rampe de dégagement 13a,
- le pion 14 porté par le doigt de passage 3, qui interdit le basculement de la clavette 13,
- une première et une deuxième piste de guidage 11a, 11b de la clé, et une piste de dégagement 11c entre celles-ci,
- un ressort de rappel de la clavette 13, qui la repousse radialement vers l'extérieur de la clé 1 en la plaquant sur une première piste de guidage 11a de celle-ci, et
- une douille de logement 17 du ressort 16.

La clavette 13 présente ainsi deux pistes de guidage : une première piste 13a, guidée sur la première piste intérieure 11a de la clé sur la première partie de la course d'engagement de marche arrière, et une deuxième piste 13b guidée sur une deuxième piste intérieure 11b de la clé sur une deuxième partie de la course d'engagement de marche arrière.

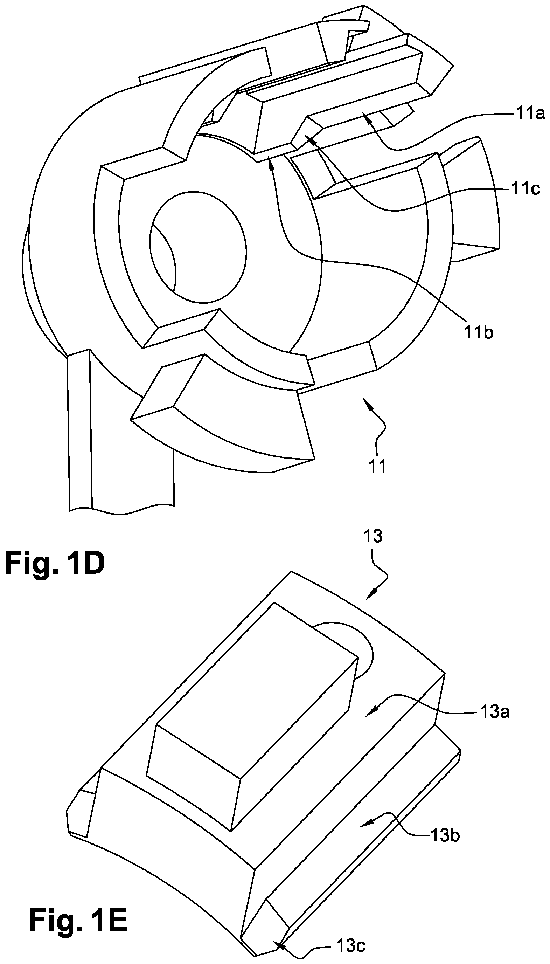

Les pistes 13 et 13b de la clavette 13 sont espacées radialement, et réunies par la rampe de dégagement inclinée 13c, qui coopère avec la rampe de dégagement 11c, reliant les deux pistes de guidage 11a, 11b de la clé, visibles sur la figure 1D. La figure 1E met en évidence les pistes de guidage 13a, 13b et la rampe de dégagement 13c de la clavette 13. La clavette peut être fabriquée en fritté, et les surfaces de contact sont choisies de manière à faciliter l'usinage de la clé. Le diamètre de la piste 11a de la clé correspond au diamètre de la piste 13a de la clavette. Le diamètre de la piste 11b de la clé, correspond au diamètre de la piste 13b.

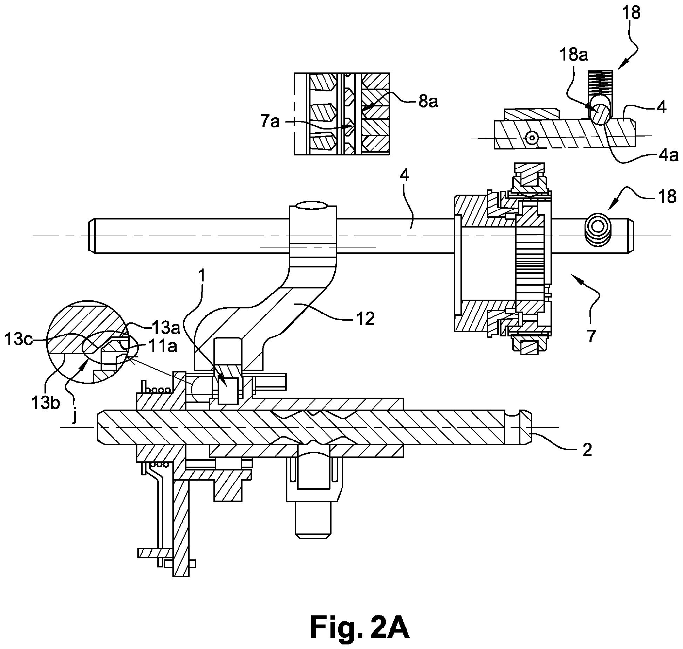

Le fonctionnement du dispositif de freinage repose sur le déplacement de la clavette 13 : le doigt 3 déplace la clavette 13 montée à l'intérieur de la clé 11 qui est engagée radialement dans le crabot de marche avant 12 qu'elle entraîne sur une première partie de la course d'engagement de la marche arrière. Elle s'escamote radialement vers l'intérieur de la clé sur une deuxième partie de la course d'engagement de la marche arrière, où elle échappe au crabot de marche avant 12. Ce fonctionnement est illustré par les figures 2A à 2D où on retrouve les principaux éléments cités plus haut. La section montre le recouvrement « r », entre la clavette 13 et le clabot 12. On voit aussi la première piste de guidage 11a de la clé 11, la deuxième piste 13b de la clavette 13. L'agrandissement partiel au niveau de la clavette 13 met en évidence le jeu j, entre les deux rampes de dégagement 11c et 13c. La coupe G-G du synchroniseur 7 passe par les dents 7a de l'anneau de synchroniseur et les entrées de dentures 8a du baladeur de cinquième 8. On a agrandi sur une coupe partielle, la cartouche de billage de cinquième 18, qui permet de verrouiller l'axe fourchette de cinquième 4 en marche arrière.

Sur la figure 2A, le dispositif est en position de sélection de cinquième. La clavette 13 est engagée dans le crabot de cinquième 12. L'axe de cinquième 4 est verrouillé par la cartouche de billage 18.

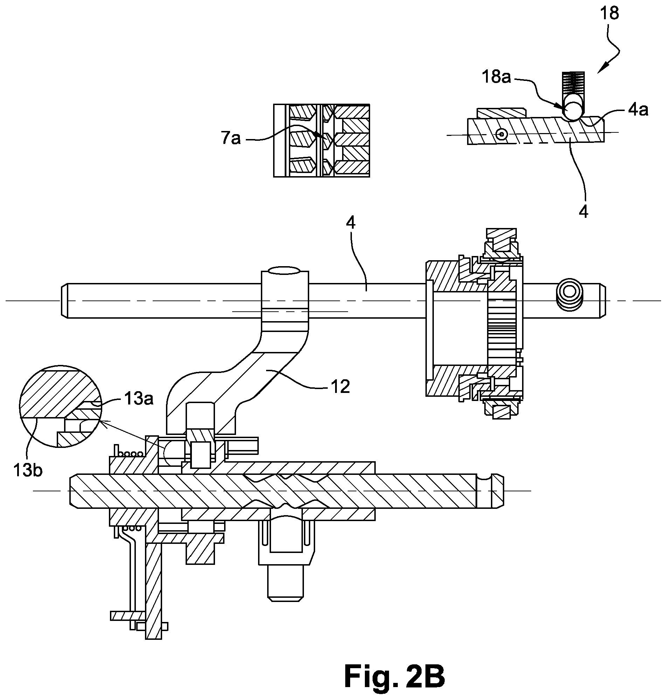

En position de sélection de marche arrière (figure 2B), la clavette 13 s'est déplacée sur la piste 11a de la clé. Lorsqu'elle rencontre la rampe de dégagement 11c, la clavette commence à descendre en direction de l'axe 2. Le pion 14 permet à la clavette 13 de descendre vers l'axe 2 sans basculer. La clavette suit la rampe de dégagement 11c. Son recouvrement avec le crabot 12 diminue. Le crabot de cinquième se déplace en translation, et entraîne le baladeur de cinquième 8. Les dents 8a du baladeur entrent en contact avec les dents 7a de l'anneau synchroniseur de cinquième. La synchronisation du pignon fou de cinquième (non représenté) freine l'arbre primaire. Le cran de billage 4a sur l'axe de cinquième 4 repousse la bille 18a de la cartouche de billage 18.

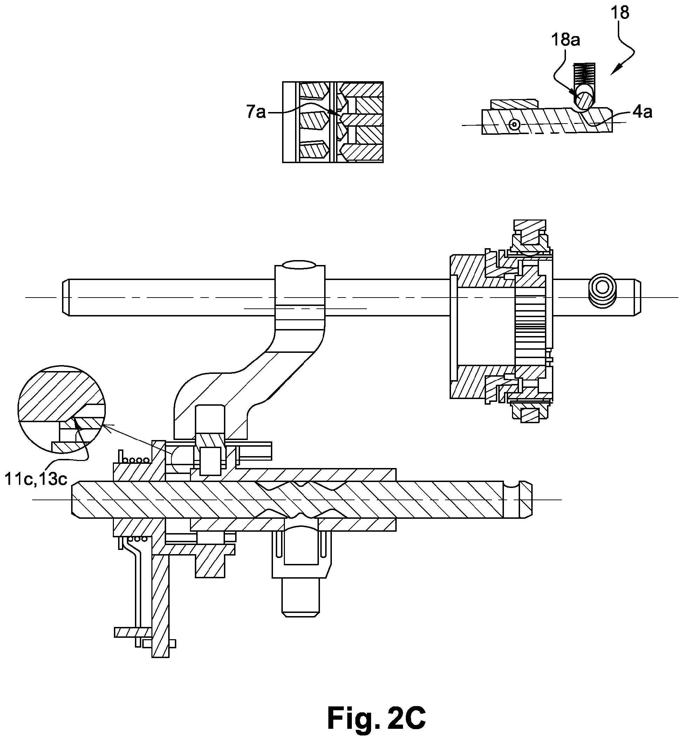

Sur la figure 2C, la clavette a continué à se déplacer et à descendre sur la rampe 11c de la clé. La rampe de la clavette 13c est toujours guidée par la rampe 11c de la clé. Le pion 14 maintient toujours la clavette 13. La phase de synchronisation se poursuit jusqu'au moment où la clavette 13 échappe au crabot de cinquième 12, avant que les dents 8a du baladeur entrent en contact avec les dents du pignon fou de cinquième. Pendant toute l'opération, la bille 18a ne sort pas de son cran 4a.

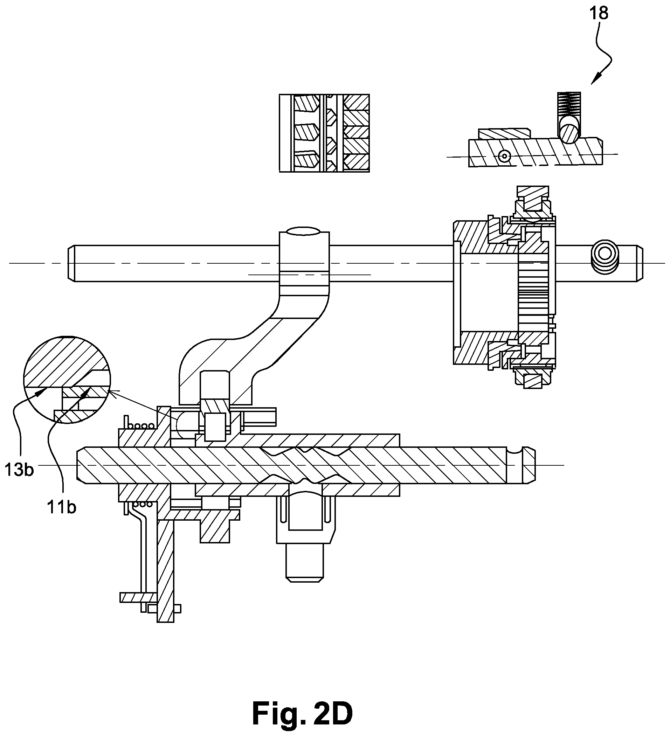

Pour atteindre la position de la figure 2D, la clavette 13 continue de se déplacer et de descendre jusqu'à la fin de la rampe 11c de la clé. La rampe 13c de la clavette dépasse complètement celle de la clé. La clavette 13 s'est échappée du crabot de marche avant, avant le crabotage entre le pignon intermédiaire de marche arrière et le baladeur 8. La piste 13b de la clavette vient en appui sur la piste de guidage 11b de la clé. Le ressort de rappel 16, maintient la clavette sur sa nouvelle piste 11b jusqu'au passage complet de la marche arrière. Le pion 14 continue d'empêcher le basculement de la clavette 13. Le billage 18 ramène l'axe de cinquième 4 en position point mort. Le baladeur revient en position de point mort. Les entrées de denture du baladeur de cinquième 12 ne sont pas entrées en contact avec les entrées de denture du pignon fou de cinquième.

Dans le mode de réalisation non limitatif de l'invention, décrit ci-dessus, le synchroniseur de marche avant qui sert à freiner le pignon intermédiaire de marche arrière, est celui du cinquième rapport de marche avant. Toutefois, sans sortir du cadre de l'invention, le système à clavette escamotable proposé fonctionne de la même façon sur d'autres lignes de vitesses de la boîte. La seule condition est que la course maximum admissible par la clavette, reste inférieure à la course du baladeur, jusqu'au début du vol libre du synchroniseur.

## Revendications

1. Dispositif de freinage de marche arrière pour boîte de vitesses à arbres parallèles comportant un axe de marche arrière monté dans un carter de boîte de vitesses et portant un pignon intermédiaire de marche arrière qui engrène en permanence avec un pignon primaire de marche arrière, et qui peut se déplacer entre des positions de désengagement et d'engagement de marche arrière, sous la commande d'un crabot de marche avant (12) actionné par un doigt de passage (3) qui est déplacé en rotation avec un axe de sélection (2) pour sélectionner une ligne de vitesses et déplacé en translation dans une clé (11) verrouillée sur l'axe de sélection (2) pour engager une vitesse de marche avant ou de marche arrière sur une ligne de vitesses sélectionnée, **caractérisé en ce que** le doigt (3) déplace une clavette (13) montée à l'intérieur de la clé (11), engagée radialement dans un crabot de marche avant (12) qu'elle entraîne sur une première partie de la course d'engagement de la marche arrière, et escamotée radialement vers l'intérieur de la clé sur une deuxième partie de la course d'engagement de la marche arrière, où elle échappe au crabot de marche avant (12).

2. Dispositif de freinage de marche arrière selon la revendication 1, **caractérisé en ce que** la clavette escamotable (13) échappe du crabot de marche avant (12), avant le crabotage entre le pignon intermédiaire de marche arrière et le baladeur (8) correspondant.

3. Dispositif de freinage selon la revendication 1 ou 2, **caractérisé en ce que** la clavette (3) présente une première piste de guidage (13a) guidée sur une première piste intérieure (11a) de la clé sur la première partie de la course d'engagement de marche arrière, et une deuxième piste de guidage (13b) guidée sur une deuxième piste intérieure (11b) de la clé sur une deuxième partie de la course d'engagement de marche arrière.

4. Dispositif de freinage selon la revendication 3, **caractérisé en ce que** la première et la deuxième piste de guidage (13, 13b) de la clavette (13) sont espacées radialement.

5. Dispositif de freinage selon la revendication 3 ou 4, **caractérisé en ce que** la première et la deuxième piste (11a, 11b) de la clé, sont réunies par une rampe de dégagement inclinée (11c).

6. Dispositif de freinage selon la revendication 5, **caractérisé en ce que** la rampe de dégagement (11c) de la clé coopère avec une rampe de dégagement (13c) de la clavette (13), reliant les deux pistes de guidage (13a, 13b) de celle-ci.

7. Dispositif de freinage selon l'une des revendications précédentes, **caractérisé en ce que** la clavette (13) est repoussée radialement vers l'extérieur de la clé (11) par un ressort (16).

8. Dispositif de freinage selon l'une des revendications précédentes, **caractérisé en ce que** le doigt de passage (3) porte un pion (14) interdisant le basculement de la clavette (13) .

9. Dispositif de commande interne de boîte de vitesses manuelle à arbres parallèles comportant un pignon primaire de marche arrière monté sur un arbre primaire de la boîte un pignon secondaire de marche arrière monté sur un arbre secondaire de la boîte et un pignon intermédiaire de marche arrière mobile entre une position de désengagement de marche arrière, où il est dégagé du pignon secondaire de marche arrière et une position d'engagement de marche arrière où il est engagé avec celui-ci, **caractérisé en ce qu'**il comporte un dispositif de freinage conforme à l'une des revendications précédentes.

10. Boîte de vitesses à arbres parallèles, **caractérisée en ce qu'**elle comporte un dispositif de freinage selon l'une des revendications 1 à 8.

## Patentansprüche

1. Vorrichtung zur Rückwärtsgang-Bremsung für ein Getriebe mit parallelen Wellen, umfassend eine Rückwärtsgang-Achse, die in ein Getriebegehäuse eingebaut ist und ein Rückwärtsgang-Zwischenzahnrad trägt, das permanent mit einem Rückwärtsgang-Primärzahnrad in Eingriff steht, und das sich zwischen Herausnahme- und Einlegepositionen des Rückwärtsgangs unter der Steuerung einer Vorwärtsgang-Klaue (12) bewegen kann, die von einem Schaltfinger (3) betätigt wird, der mit einer Anwahlachse (2) rotatorisch bewegt wird, um eine Schaltgasse anzuwählen, und in einem Schlüssel (11), der auf der Anwahlachse (2) verriegelt ist, translatorisch bewegt wird, um auf einer angewählten Schaltgasse einen Vorwärts- oder Rückwärtsgang einzulegen, **dadurch gekennzeichnet, dass** der Finger (3) eine Passfeder (13) bewegt, die innerhalb des Schlüssels (11) angebracht ist, die mit einer Vorwärtsgang-Klaue (12) radial in Eingriff steht, die sie auf einem ersten Abschnitt des Einlegewegs des Rückwärtsgangs mitnimmt, und zum Inneren des Schlüssels hin auf einem zweiten Abschnitt des Einlegewegs des Rückwärtsgangs radial eingefahren wird, wo sie sich von der Vorwärtsgang-Klaue (12) löst.

2. Vorrichtung zur Rückwärtsgang-Bremsung nach Anspruch 1, **dadurch gekennzeichnet, dass** sich die einfahrbare Passfeder (13) vor der Kupplung zwischen dem Rückwärtsgang-Zwischenzahnrad und dem entsprechenden Schieberad (8) von der Vorwärtsgang-Klaue (12) löst.

3. Vorrichtung zur Rückwärtsgang-Bremsung nach Anspruch 1 oder 2, **dadurch gekennzeichnet, dass** die Passfeder (3) eine erste Führungsbahn (13a) aufweist, die auf einer ersten Innenbahn (11a) des Schlüssels auf dem ersten Abschnitt des Rückwärtsgang-Einlegewegs geführt wird, und eine zweite Führungsbahn (13b), die auf einer zweiten Innenbahn (11b) des Schlüssels auf dem zweiten Abschnitt des Rückwärtsgang-Einlegewegs geführt wird.

4. Vorrichtung zur Bremsung nach Anspruch 3, **dadurch gekennzeichnet, dass** die erste und die zweite Führungsbahn (13, 13b) der Passfeder (13) radial beabstandet sind.

5. Vorrichtung zur Bremsung nach Anspruch 3 oder 4, **dadurch gekennzeichnet, dass** die erste und die zweite Führungsbahn (11a, 11b) des Schlüssels durch eine geneigte Löserampe (11c) vereint sind.

6. Vorrichtung zur Bremsung nach Anspruch 5, **dadurch gekennzeichnet, dass** die Löserampe (11c) des Schlüssels mit einer Löserampe (13c) der Passfeder (13) zusammenwirkt, wobei die zwei Führungsbahnen (13a, 13b) derselben verbunden werden.

7. Vorrichtung zur Bremsung nach einem der vorhergehenden Ansprüche, **dadurch gekennzeichnet, dass** die Passfeder (13) durch eine Feder (16) radial in Richtung der Außenseite des Schlüssels (11) gedrückt wird.

8. Vorrichtung zur Bremsung nach einem der vorhergehenden Ansprüche, **dadurch gekennzeichnet, dass** der Schaltfinger (3) einen Stift (14) trägt, der das Kippen der Passfeder (13) untersagt.

9. Vorrichtung zur internen Steuerung eines Getriebes mit parallelen Wellen, umfassend ein Rückwärtsgang-Primärzahnrad, das an einer Primärwelle des Getriebes angebracht ist, ein Rückwärtsgang-Sekundärzahnrad, das an einer Sekundärwelle des Getriebes angebracht ist, und ein Rückwärtsgang-Zwischenzahnrad, das zwischen einer Rückwärtsgang-Herausnahmeposition, wo es von dem Rückwärtsgang-Sekundärzahnrad gelöst ist, und einer Rückwärtsgang-Einlegeposition, wo es mit demselben in Eingriff steht, beweglich ist, **dadurch gekennzeichnet, dass** sie eine Vorrichtung zur Bremsung nach einem der vorhergehenden Ansprüche umfasst.

10. Getriebe mit parallelen Wellen, **dadurch gekennzeichnet, dass** es eine Vorrichtung zur Bremsung nach einem der Ansprüche 1 bis 8 umfasst.

## Claims

1. Device for braking of reversing in a parallel shaft gearbox including a reversing shaft mounted in a gearbox housing and carrying an intermediate reversing gear which continually meshes with a primary reversing gear and which can move between a reverse gear disengaged position and a reverse gear engaged position under the control of a forward dog (12) actuated by a shift finger (3) which is rotated with a selector shaft (2) to select a line of gears and moved in translation in a key (11) locked on the selector shaft (2) to engage a forward or reverse gear on a selected line of gears, **characterized in that** the finger (3) moves a cotter (13) mounted inside the key (11), radially engaged in a forward dog (12) which it drives over a first part of the reverse gear engagement travel, and radially retracted towards the interior of the key over a second part of the reverse gear engagement travel, in which it escapes from the forward dog (12).

2. Device for braking of reversing according to Claim 1, **characterized in that** the retractable cotter (13) escapes from the forward dog (12) before the dogging between the intermediate reversing gear and the corresponding slider (8) occurs.

3. Device for braking according to Claim 1 or 2, **characterized in that** the cotter (3) has a first guide track (13a) guided on a first interior track (11a) of the key over the first part of the reverse gear engagement travel and a second guide track (13b) guided on a second interior track (11b) of the key over a second part of the reverse gear engagement travel.

4. Braking device according to Claim 3, **characterized in that** the first and second guide tracks (13a, 13b) of the cotter (13) are radially spaced.

5. Braking device according to Claim 3 or 4, **characterized in that** the first and second tracks (11a, 11b) of the key are connected by an inclined disengagement ramp (11c).

6. Braking device according to Claim 5, **characterized in that** the disengagement ramp (11c) of the key cooperates with a disengagement ramp (13c) of the cotter (13) connecting the two guide tracks (13a, 13b) of the latter.

7. Braking device according to any one of the preceding claims, **characterized in that** the cotter (13) is pushed radially towards the exterior of the key (11) by a spring (16).

8. Braking device according to any one of the preceding claims, **characterized in that** the shift finger (3) carries a pin (14) preventing tilting of the cotter (13).

9. Parallel shaft manual gearbox internal control device including a primary reversing gear mounted on a primary shaft of the gearbox, a secondary reversing gear mounted on a secondary shaft of the gearbox, and an intermediate reversing gear movable between a reverse gear disengaged position in which it is disengaged from the secondary reversing gear and a reverse gear engaged position in which it is engaged with the latter, **characterized in that** it includes a braking device according to any one of the preceding claims.

10. Parallel shaft gearbox **characterized in that** it includes a braking device according to any one of Claims 1 to 8.
